# EUROPEAN PATENT SPECIFICATION

(11) **EP 4 441 819 B1**
(45) Date of publication and mention of the grant of the patent: **14.01.2026**
(21) Application number: 22838990.4
(22) Date of filing: 30.11.2022
(51) Int. Cl.: H01M 10/04, H01M 10/0583

(54) **APPARATUS FOR FORMING AN ELECTRODE STRIP FOR ELECTRICAL ENERGY STORAGE DEVICES**
VORRICHTUNG ZUR HERSTELLUNG EINES ELEKTRODENSTREIFENS FÜR ELEKTRISCHE ENERGIESPEICHER
APPAREIL POUR FORMER UNE BANDE D'ÉLECTRODE POUR DES DISPOSITIFS DE STOCKAGE D'ÉNERGIE ÉLECTRIQUE

(30) Priority: 30.11.2021 IT 202100030239; 30.11.2021 IT 202100030254
(43) Date of publication of application: 09.10.2024
(73) Proprietor: P.I.T. S.r.l., 40057 Granarolo Dell´Emilia (BO) (IT)
(72) Inventor: SPATAFORA, Mario, 40057 Granarolo dell'Emilia (BO) (IT); ALONGI, Pasqualino, 40057 Granarolo dell'Emilia (BO) (IT)
(74) Representative: Manzella & Associati
(86) International application number: PCT/IT2022/050311
(87) International publication number: WO 2023/100210

(56) References cited:
- WO-A1-2019/053530
- WO-A1-2021/008553
- WO-A1-2021/008555
- KR-A- 20200 131 181
- US-A1- 2019 273 279
- US-A1- 2020 185 753

## Description

### Technical field

The present invention relates to an apparatus and a method for forming an electrode strip for manufacturing electrical energy storage devices.

### Prior art

The use of electric batteries consisting of a plurality of electrodes alternately forming an anode and a cathode, arranged in a stack is currently known in the field of electrical energy storage devices. The electrodes forming anode and cathode are separated by a separator element. The separator element is formed, for example, of polymeric material.

In order to manufacture the aforementioned electric batteries, a known system provides for example the use of a separator element made of a single continuous strip, carrying said anode and cathode applied on the opposite and alternating faces. In particular, according to a known embodiment, called "z-folding", the separator strip is folded several times in alternating directions.

A machine for manufacturing electric batteries of this type is illustrated for example in European patents EP 2 569 816 and EP 2 856 552 and in US patent application 2019/0229360. US 2019/273279 A1, WO 2019/053530 A1 and KR 2020 0131181 A represent other prior art machines.

The formation of the electrode strip intended for making, by means of accordion bending or "z-folding", of the aforementioned electrode stack represents a critical phase in the production process of the electrical energy storage devices.

In particular, several systems have been proposed to permanently associate the anode and cathode elements with the separator, which however do not meet the current production needs of the sector.

In particular, the formation of the electrode strip helps to determine a relatively low production speed in the manifacture of the electrical energy storage devices.

It is also complained that the current systems for forming the electrode strip used for manufacturing electrical energy storage devices are often highly complex, inefficient and costly to produce.

### Disclosure

The aim of the present invention is to solve the aforementioned problems, by devising an apparatus that allows an optimal formation of a strip of electrodes for manufacturing electrical energy storage devices, such as for example electric batteries consisting of a plurality of electrodes arranged in stacks, comprising at least one anode, at least one cathode and at least one separator.

As part of this aim, it is a further object of the invention to provide an apparatus for forming an electrode strip for manufacturing electrical energy storage devices that ensures a high production speed.

A further object of the invention is to provide an apparatus for forming an electrode strip for manufacturing electrical energy storage devices of simple construction and functional design, which is reliable in operation, has versatile use, as well as relatively low cost.

The aforementioned aims are achieved, according to the present invention, by the apparatus for forming a strip of electrodes for manufacturing electric energy storage devices, such as electric batteries consisting of a stack of electrodes formed by folding a flexible strip, comprising at least one separator carrying a series of anode elements and a series of cathode elements alternatively applied, in an ordered sequence, according to claim 1.

Preferably said anode elements and said cathode elements are applied alternately, in an ordered sequence, on said separator of the flexible strip.

The apparatus for forming an electrode strip comprises first feeding means adapted to feed a strip of separating material and second and third feeding means adapted to feed said anode elements and said cathode elements, respectively.

According to the present invention, the apparatus comprises means for coupling said anode and cathode elements to said separator comprising a pair of counter-rotating coupling wheels between which said separator is fed, according to a median plane to the same counter-rotating coupling wheels.

Preferably said feeding plane of the separator is arranged vertically.

According to one aspect of the present invention, said counter-rotating coupling wheels are adapted to receive and hold on the peripheral surface alternately said anode and cathode elements, to transfer the same anode and cathode elements alternately on the opposite faces of said separator.

Advantageously, each wheel of said pair of coupling wheels comprises retaining means configured to retain said anode and cathode elements respectively, and subsequently to transfer the anode and cathode elements alternately onto said separator.

Advantageously, said retaining means is configured to act by suction.

Advantageously, said anode elements and said cathode elements are respectively transferred on said opposite faces of the separator in positions spaced from each other in such a way as to define, between each pair of anode elements and consecutive cathode elements, a free section for the subsequent folding of said flexible strip, according to a folding line transverse to the same flexible strip.

Preferably said coupling means comprises means adapted to preheat said separator and said anode and cathode elements up to a controlled temperature.

Preferably said coupling means comprises a pair of counter-rotating rolling cylinders, arranged downstream of said coupling wheels, whereby a mechanical rolling process of said separator, carrying applied said anode and cathode elements, is carried out to obtain said flexible strip.

According to a different embodiment of the apparatus, said coupling means comprises electrostatic means adapted to polarize said strip of separator material.

Advantageously, said electrostatic means comprises a pair of electrostatic bars arranged upstream of said counter-rotating coupling wheels, facing from the opposite sides said strip of separator material, said electrostatic bars being adapted to polarize the same strip of separator material.

Preferably said counter-rotating coupling wheels comprise, on their peripheral surface, retaining means adapted to retain said anode and cathode elements.

Preferably said retaining means is adapted to act by suction.

Advantageously, said second and third feeding means comprise respective means for transferring said anode and cathode elements to said coupling means comprising a transfer wheel carrying peripherally a plurality of angularly spaced means for gripping said anode and cathode elements.

Advantageously, said gripping means is carried tilting on said transfer wheel by means of relative levers adapted to orient said anode and cathode elements between a first collecting position and a second position of transfer to said coupling means.

Preferably, the apparatus comprises cutting means adapted to cut to size individual portions of strips of anode material and cathode material to form said anode elements and said cathode elements.

Preferably said second and third feeding means comprise respective shearing means adapted to make, along the opposite sides of said tapes of anode and cathode material, in longitudinally staggered positions, a series of tabs protruding from the same strips.

Preferably said second and third feeding means comprise, in an intermediate position between said shearing means and said cutting means, respective means for drawing the same strips of anode and cathode material.

Preferably said drawing means comprises a first and a second drawing member arranged in series, between which a loop is formed, on said advancing strips of anode and cathode material, adapted to functionally decouple said first drawing member from said second drawing member.

The present invention also relates to a machine for manufacturing electrical energy storage devices, of the type comprising a stack of electrodes formed by folding a flexible strip, said machine comprising folding means operable in suitable phase relationship to perform a series of orthogonal pleats on said flexible strip and to deposit the flexible strip so bent on a stacking plane.

Advantageously, said folding means comprises a plurality of folding assemblies peripherally distributed on rotatable means operable in rotation with continuous movement according to a respective axis of rotation and tilting respectively according to an axis parallel to said axis of rotation of the rotatable means.

Preferably, gripping means is associated with said folding assemblies capable of gripping said flexible strip in succession at a section interposed between said anode elements and said cathode elements.

The present invention also relates to a method for forming a strip of electrodes for manufacturing electrical energy storage devices, of the type comprising a stack of electrodes formed by folding a flexible strip comprising a separator of dielectric material carrying a series of anode elements and a series of cathode elements applied in ordered sequence, said method comprises the steps of
a. advancing a separator strip;
b. advancing said anode elements and said cathode elements in a suitable phase relationship;
c. actuating in rotation a pair of counter-rotating coupling wheels between which said separator is fed along a median plane to the same coupling wheels;
d. feeding said anode elements and said cathode elements respectively to a respective wheel of said pair of coupling wheels, which retains, by means of retaining means, said anode elements and said cathode elements; and thereafter
e. transferring said anode and cathode elements from the respective coupling wheel alternately onto said separator.

Preferably each wheel of said pair of coupling wheels respectively receives said anode and cathode elements in a respective receiving position and alternatively transfers the anode and cathode elements to the separator in a coupling position, reached after one rotation of the pair of coupling wheels.

Advantageously, the method comprises the further step of
f. feeding said separator strip carrying applied said anode and cathode elements, coming out from said counter-rotating coupling wheels, to a pair of counter-rotating rolling cylinders, whereby a mechanical rolling process of said separating strip carrying said anode and cathode elements is carried out.

Preferably the method provides for transferring said anode elements and said cathode elements respectively onto said opposite faces of the separator in positions spaced apart from one another in such a way as to define, between each pair of consecutive anode elements and cathode elements, a free portion for the subsequent folding of said flexible strip, according to a folding line transversal to the same flexible strip.

Preferably the method provides for preheating said strip of separator material and said anode and cathode elements up to a controlled temperature.

### Description of drawings

The details of the invention will become more apparent from the detailed description of a preferred embodiment of the apparatus for forming a strip of electrodes for making electrical energy storage devices, such as electric batteries and the like, illustrated by way of example in the accompanying drawings, wherein:

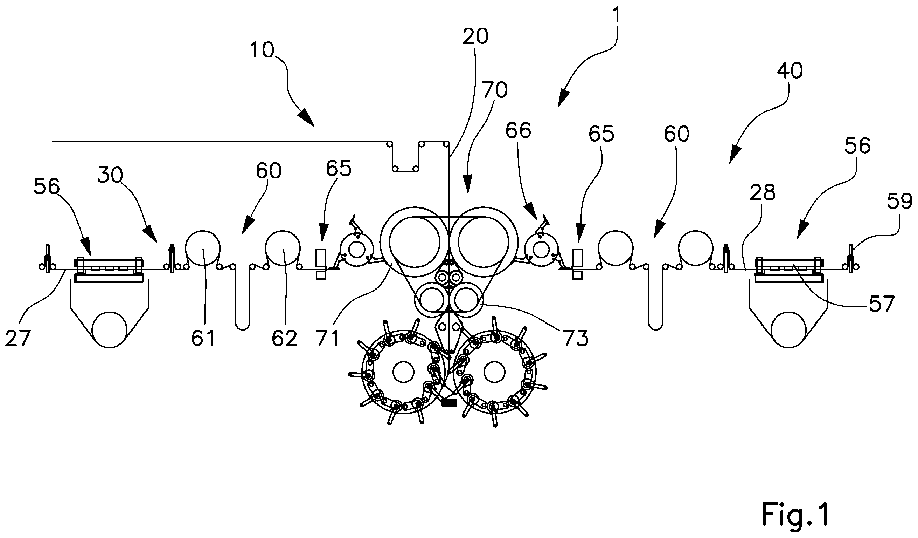

Figure 1 is a schematic side view of the apparatus for forming an electrode strip according to the present invention;

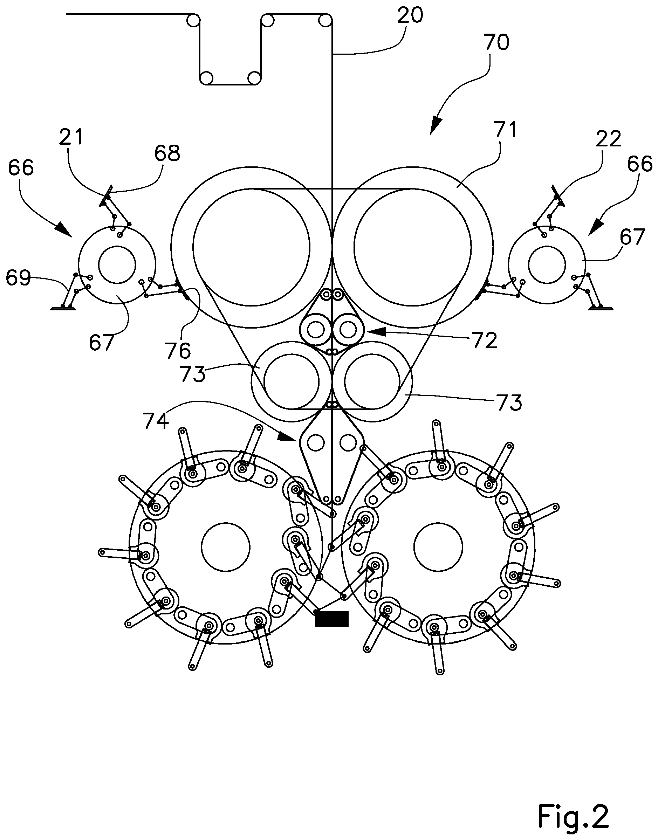

Figure 2 is an enlarged portion of said side view of the apparatus;
Figure 3 shows, in the same enlarged side view, a different embodiment of the apparatus;
Figures 4 and 5 are a schematic perspective view of the flexible strip carrying the electrodes in successive folding steps.

### Description of embodiments of the invention

With particular reference to these figures, the reference sign 1 indicates as a whole the apparatus for forming a strip of electrodes for making electric energy storage devices, such as electric batteries consisting of a stack of electrodes formed by folding a flexible strip 2 comprising at least one separator 20 carrying, applied alternately on the opposite faces, in an ordered sequence, a series of anode elements 21 and a series of cathode elements 22. Said separator element 20 is formed, for example, of polymeric material.

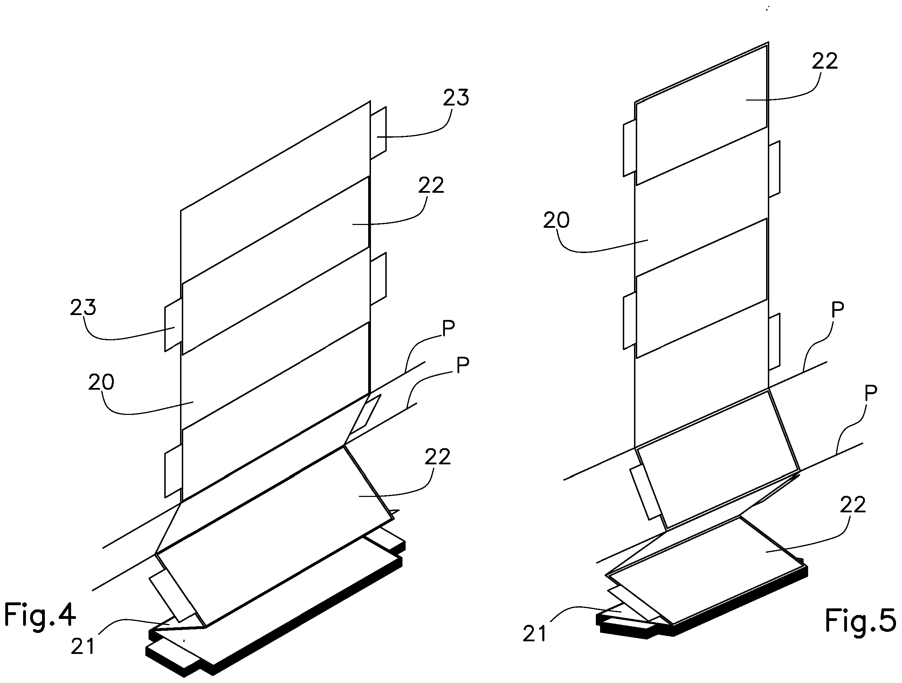

**In** particular, said anode elements 21 and said cathode elements 22 are staggered with respect to one another, along the flexible strip 2, so as to be superimposed and separated by a portion of the separator 20, upon folding substantially in accordion pleat of the same flexible strip 2 (see Figures 4 and 5).

Conveniently, said anode elements 21 and said cathode elements 22 have, at one end, a terminal section or flag 23 protruding laterally from the flexible strip 2. **In** particular, said end section 23 of the anode elements 21 is protruding from the opposite side of the flexible strip 2 with respect to the end section 23 of the cathode elements 22.

Obviously it is possible to provide that the flags of the electrodes are arranged differently, for example protruding all from the same side of the flexible strip 2, according to the type of electric battery.

The separator 20 is obtained from a reel of web material. Hereafter, for greater clarity, such web material constituting the separator will be referred to as strip of separator material 20.

The anode and cathode elements 21, 22 are in turn obtained from respective reels of material by cutting individual portions intended to constitute the aforementioned electrodes. Hereafter, for similar reasons of clarity, such wound materials intended to provide the anode and cathode elements 21, 22 will be referred to as a strip of anode material 27 and a strip of cathode material 28.

The apparatus comprises first feeding means 10 adapted to feed a strip of separating material 20 and second and third feeding means 30, 40 adapted to feed said strip of anode and cathode material 27, 28, respectively.

The second feeding means 30 and the third feeding means 40 of the strips of anode and cathode material 27, 28 are suitably similar from a constructive and functional point of view. The following description therefore refers to both feeding means 30, 40, where the corresponding parts have the same reference signs.

The feeding means 30, 40 of the anode and cathode material strips 27, 28 comprises a shearing assembly 56 adapted to create along the opposite sides of the strips of anode and cathode material 27, 28, in longitudinally staggered positions, a series of tabs protruding from the same strips. These tabs are intended to constitute the terminal section 23 of the anode elements 21 and the cathode elements 22, i.e. the terminals of connection of the electrodes. The shearing assembly 56 provides a shearing member 57 actuated in a direction orthogonal to the strips of anode and cathode material 27, 28 by a suitable pressing member. The cutting member 57 is suitably interchangeable depending on the size of the electrodes.

**It** should be noted that, during the step of shearing of the strips of anode and cathode material 27, 28, these strips must have zero speed with respect to the shearing means. To this end, upstream and downstream of the shearing assembly 56 temporary storage means 59 of the strips of anode and cathode material 27, 28 are arranged at the entry and at the exit of said shearing means, operable in a suitable phase relationship with the actuation of the shearing member 57.

In particular, said temporary storage means 59 provides for storing the strip material upstream of the shearing means during the shearing step and for recovering the same strip material downstream, at the end of the shearing step.

Downstream of the shearing assembly 56, a drawing assembly 60 of the strips of anode and cathode material 27, 28 is arranged. The drawing assembly 60 comprises a first and a second drawing member 61, 62 arranged in series, between which an advancing loop is formed on said strips of anode and cathode material 27, 28, adapted to functionally decouple said first drawing member 61 from said second drawing member 62, so as to ensure continuity of feeding of the strips of anode and cathode material 27, 28.

Downstream of the drawing assembly 60, a cutting assembly 65 is arranged, adapted to cut to size individual portions of said strips of anode and cathode material 27, 28 to form said anode elements 21 and said cathode elements 22.

The anode elements 21 and the cathode elements 22 cut from the strips of anode and cathode material 27, 28 are collected in succession by a transfer assembly 66 adapted to transfer said anode elements 21 and cathode elements 22.

Said transfer assembly 66 comprises a wheel 67 rotatable according to an axis parallel to the vertical plane of feeding the strips of anode and cathode material 27, 28. The transfer wheel 67 peripherally carries a plurality of gripping means 68, angularly spaced, adapted to collect said individual anode and cathode elements 21, 22 at the exit from said cutting assembly 65. In the illustrated case, the transfer wheel 67 peripherally carries three gripping means 68 but it is obviously possible to provide a different number of gripping means, depending on the needs.

The gripping means 68 consists, for example, of a plate connected to suitable suction means, for holding said individual anode and cathode elements 21, 22 on its surface.

The gripping means 68 is carried tilting on the transfer wheel 67 through relative lever systems 69 suitable for orienting the anode and cathode elements 21, 22 between a first collecting position and a second transfer position to a subsequent coupling assembly 70, adapted to operate the coupling of the anode and cathode elements 21, 22 with the strip of separator material 20.

The coupling assembly 70 comprises a pair of counter-rotating coupling wheels 71 between which the strip of separator material 20 is fed according to a substantially vertical median plane. The counter-rotating coupling wheels 71 are capable of receiving and retaining the anode and cathode elements 21, 22 alternately on the peripheral surface, until the moment of transfer of the same anode and cathode elements 21, 22 alternatively onto the opposite faces of the strip of separator material 20.

In particular, the anode and cathode elements 21, 22 are respectively transferred onto the opposite faces of the strip of separator material 20 in positions spaced apart from one another in such a way as to define, between each pair of consecutive anode elements and cathode elements 21, 22, a free section for the subsequent folding of the flexible strip 2, according to a folding line P transversal to the same flexible strip 2.

The counter-rotating coupling wheels 71 comprise, on the peripheral surface, retention means 76 capable of retaining alternatively, in suitably spaced positions, said anode and cathode elements 21, 22. Said retention means 76 is able to act for example by means of suction or by means of suitable mechanical members.

Conveniently, the strip of separator material 20 and the anode and cathode elements 21, 22 are preheated up to a controlled temperature so as to facilitate mutual coupling.

Upon exiting the counter-rotating coupling wheels 71, the separator 20 carrying the anode elements 21 and the cathode elements 22 applied alternately on the opposite faces, in an ordered sequence, engages an advancing pressure member 72 comprising a pair of strips opposing each other, capable of keeping the anode and cathode elements 21, 22 in adhesion on the strip of separator material 20.

The flexible strip 2 engages thereafter a pair of counter-rotating rolling cylinders 73, whereby a mechanical rolling process of the same flexible strip 2 is carried out.

Downstream of the rolling cylinders 73, the flexible rolled strip 2 is taken up by a drawing assembly 74 formed by a pair of strip members which wind on rollers carried by a relative frame so as to act under pressure with a vertical branch on the same flexible strip 2, from the opposite sides with respect to the feeding plane of the flexible strip 2, to accompany its feed along the feed direction. The synchronous actuation of the strip members 74 determines the advancement with continuous or alternating movement of the flexible strip 2.

The flexible strip 2 thus formed can be fed in line to folding means which carry out the aforementioned accordion pleat of the same flexible strip 2, according to folding lines P orthogonal to the direction of advance of the flexible strip 2.

Alternatively, it is possible to provide for feeding the flexible strip 2 carrying the electrodes 21, 22 so formed to the means for winding the same flexible strip 2 into the form of a reel.

The electrode strip wound in a reel can be stored for later use in a machine for making electrical energy storage devices.

The operation of the apparatus for forming a strip of electrodes for manufacturing electric batteries can be easily understood from the following description.

The first feeding means 10 and the second and third feeding means 30, 40 operate the advancement in parallel respectively of a strip of separator material 20 along a first direction of advance and of a strip of anode material 27 and a strip of cathode material 28 along second and third feeding directions.

In particular, during the advancement of the strip of anode material 27 and of the strip of cathode material 28, a respective shearing assembly 56 provides for forming along the opposite sides of the same strips of anode and cathode material 27, 28, in longitudinally staggered positions, a series of tabs 23 protruding from the strips. These tabs 23 are intended to constitute the terminal section of the anode elements 21 and of the cathode elements 22, i.e. the connection terminals of the electrodes forming the electrical energy storage device.

The strips of anode and cathode material 27, 28 are dragged successively by the drawing assembly 60 at the cutting assembly 65, able to cut to size individual portions of said strips of anode and cathode material 27, 28 for forming said anode elements 21 and said cathode elements 22.

The anode elements 21 and the cathode elements 22 cut from the strips of anode and cathode material 27, 28 are sequentially collected by the transfer assembly 66 and transferred in sequence to the coupling assembly 70.

In particular, the coupling assembly 70 comprises a pair of counter-rotating coupling wheels 71 between which the strip of separator material 20 is fed along a substantially vertical median plane. The counter-rotating coupling wheels 71 provide for receiving and retaining the anode and cathode elements 21, 22 alternately on the peripheral surface, until the moment of transfer of the same anode and cathode elements 21, 22 alternatively on the opposite faces of the strip of separator material 20.

The anode and cathode elements 21, 22 are respectively transferred onto the opposite faces of the strip of separator material 20 in positions spaced apart from one another in such a way as to define, between each pair of consecutive anode elements and cathode elements 21, 22, a free section for the subsequent folding of the flexible strip 2, according to a folding line P transversal to the same flexible strip 2.

The strip of separator material 20 carrying the anode and cathode elements 21, 22 applied, at the exit of the counter-rotating coupling wheels 71, is fed through the pressure member 72 to a pair of counter-rotating rolling cylinders 73, whereby the mechanical rolling process of the same strip of separator material 20 bearing said anode and cathode elements 21, 22 applied is carried out.

The flexible strip 2 carrying the anode and cathode elements 21, 22 forming the electrodes can be fed in line to folding means which carries out the aforementioned accordion pleat of the same flexible strip 2, according to folding lines P orthogonal to the direction of advancement of the flexible strip 2 (see Figures 4 and 5).

Advantageously said folding means is of the type described in the patent application IT 102021000027887 in the name of the same Applicant.

Alternatively, as has been stated, it is possible to provide for feeding the flexible strip 2 carrying the electrodes so formed to means for winding said flexible strip 2 into the form of a reel. The electrode strip wound in a reel can be stored for later use in a machine for making electrical energy storage devices.

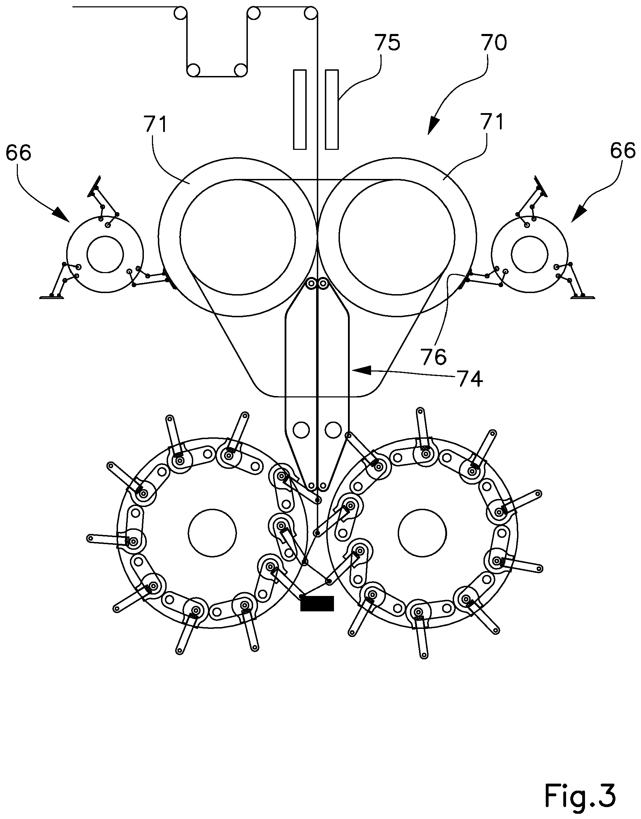

Figure 3 illustrates a different embodiment of the apparatus in which, for joining the anode and cathode elements 21, 22 to the strip of separator material 20, use is made of the polarization of the same strip of separator material 20. This is made possible by the fact that the separator 20 is formed of non-conductive material, for example plastic material.

For this purpose it is possible to provide for the use of a pair of electrostatic bars 75 arranged upstream of the coupling device 70, facing from opposite sides to the strip of separator material 20.

The described apparatus achieves the object of optimally forming a strip of electrodes for manufacturing electrical energy storage devices, such as electric batteries consisting of a stack of electrodes, formed by folding a flexible strip comprising at least one separator having applied alternately, in an ordered sequence, a series of anode elements and a series of cathode elements.

In particular, the apparatus for forming an electrode strip according to the present invention ensures a high production speed in a machine for manufacturing electrical energy storage devices.

The apparatus described by way of example is susceptible to numerous modifications and variations according to the different requirements.

In the practical embodiment of the invention, the materials used, as well as the shape and the dimensions, may be modified depending on needs.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. An apparatus for forming a strip of electrodes for manufacturing electrical energy storage devices, of the type comprising a stack of electrodes formed by folding a flexible strip (2), said apparatus comprising
first feeding means (10) adapted to operate the advancement of a separator strip (20); second and third feeding means (30, 40) adapted to operate the advancement respectively of anode elements (21) and of cathode elements (22);
means (70) for coupling said anode and cathode elements (21, 22) to said separator (20) comprising a pair of counter-rotating coupling wheels (71) between which said separator (20) is fed, according to a median plane to the same counter-rotating coupling wheels (71),
**characterized in that** each wheel of said pair of coupling wheels (71) comprises retaining means (76) configured to retain said anode and cathode elements (21, 22) respectively, and subsequently to transfer the anode and cathode elements (21, 22) alternately on said separator (20).

2. The apparatus of claim 1, wherein said retaining means (76) is configured to act by suction.

3. An apparatus of claim 1 or 2, wherein said coupling means (70) comprises a pair of counter-rotating rolling cylinders (73), arranged downstream of said coupling wheels (71), whereby a mechanical process of rolling said separator strip (20) carrying said anode and cathode elements (21, 22) applied, is carried out to obtain said flexible strip (2).

4. An apparatus of any one of the preceding claims, wherein each wheel of said pair of coupling wheels (71) is configured to respectively receive said anode and cathode elements (21, 22) in a respective receiving position and to alternatively transfer the anode and cathode elements (21, 22) to the separator (20) in a coupled position, reached after one rotation of the pair of coupling wheels (71).

5. An apparatus of any one of the preceding claims, wherein it comprises heating means configured to preheat said separator (20) and said anode and cathode elements (21, 22) before their mutual coupling.

6. An apparatus of any one of the preceding claims, wherein said second and third feeding means (30, 40) comprise respective transfer means (66) configured to transfer said anode and cathode elements (21, 22) to said coupling means (70) and comprising a respective transfer wheel (67) peripherally carrying a plurality of gripping means (68), angularly spaced apart, suitable for collecting said anode and cathode elements (21, 22) respectively.

7. The apparatus of claim 6, wherein said gripping means (68) is carried tilting on said transfer wheel (67) by relative levers (69) adapted to orient said anode and cathode elements (21, 22) between a first collecting position and a second position of transferring said elements to said coupling means (70).

8. An apparatus of any one of the preceding claims, wherein said separator (20) is fed to said pair of coupling wheels (71) along a substantially vertical plane.

9. An apparatus of any one of the preceding claims, wherein said anode elements (21) and said cathode elements (22) are formed by respectively cutting individual portions from a strip of anode material (27) and of cathode material (28) by respective cutting means (65).

10. The apparatus of claim 9, wherein it also comprises upstream of said respective cutting means (65), respective shearing means (56) suitable for making along opposite sides of said strips of anode and cathode material (27, 28), in longitudinally staggered positions, a series of tabs (23) protruding from the strips.

11. An apparatus of claim 9 or 10, wherein it comprises, upstream of said cutting means (65), respective drawing means (60) of the strips of anode and cathode material (27, 28), said drawing means (60) comprising first and second drawing members (61, 62) arranged in series and configured to be actuated so as to form a loop (29) of the advancing strip of anode and cathode material (27, 28) respectively so as to functionally decouple said first drawing member (61) from said second drawing member (62).

12. A machine for manufacturing electrical energy storage devices, of the type comprising a stack of electrodes formed by folding a flexible strip (2), said machine comprising an apparatus in accordance with any one of the preceding claims, wherein it also comprises folding means (41, 42) operable in a suitable phase relationship to perform a series of orthogonal folds (P) on said flexible strip (2) and to deposit the so folded flexible strip (2) on a stacking plane (9), wherein said folding means (41, 42) comprises a plurality of folding assemblies (41, 42) peripherally distributed on rotatable means (31, 32) adapted to be rotated with continuous movement according to a respective axis of rotation (33, 34) and tilting respectively around an axis (43, 44) parallel to said axis of rotation (33, 34) of the rotating means (31, 32), to said folding assemblies (41, 42) being associated gripping means (49) suitable for gripping said flexible strip (2) in succession at a section interposed between said anode elements (21) and said cathode elements (22).

13. A method for forming a strip of electrodes for manufacturing electrical energy storage devices, of the type comprising a stack of electrodes formed by folding a flexible strip (2) comprising a separator (20) of dielectric material carrying applied in ordered sequence a series of anode elements (21) and a series of cathode elements (22), said method comprises the steps of
a. advancing a separator strip (20);
b. advancing said anode elements (21) and said cathode elements (22) in a suitable phase relationship;
c. rotating a pair of counter-rotating coupling wheels (71) between which said separator (20) is fed along a median plane to the same coupling wheels (71);
d. feeding said anode elements (21) and said cathode elements (22) respectively to a respective wheel of said pair of coupling wheels (71) which retains, by means of retaining means (76), said anode elements (21) and said cathode elements (22); and subsequently
e. transferring said anode and cathode elements (21, 22) from the respective coupling wheel (71) alternately onto said separator (20).

14. The method of claim 13, wherein each wheel of said pair of coupling wheels (71) respectively receives said anode and cathode elements (21, 22) in a respective receiving position and alternately transfers the anode and cathode elements (21, 22) to the separator (20) in a coupling position, reached after one rotation of the pair of coupling wheels (71).

15. A method of claim 13 or 14, wherein it comprises the further step of
f. feeding said separator (20) carrying applied said anode and cathode elements (21, 22), coming out from said counter-rotating coupling wheels (71), to a pair of counter-rotating rolling cylinders (73), whereby a mechanical rolling process of said separator (20) carrying said anode and cathode elements is carried out (21, 22).

## Patentansprüche

1. Vorrichtung zum Bilden eines Elektrodenstreifens für die Herstellung von elektrischen Energiespeichergeräten von dem Typ, der einen Stapel von Elektroden umfasst, die durch Falten eines flexiblen Streifens (2) gebildet sind, wobei die Vorrichtung Folgendes umfasst:
erste Zuführmittel (10), die angepasst sind, um den Vorschub eines Trennstreifens (20) zu betreiben;
zweite und dritte Zuführmittel (30, 40), die angepasst sind, um den Vorschub von jeweils Anodenelementen (21) und Kathodenelementen (22) zu betreiben;
Mittel (70) zum Koppeln der Anoden- und Kathodenelemente (21, 22) mit dem Separator (20), umfassend ein Paar von gegenläufig rotierenden Kupplungsrädern (71), zwischen denen der Separator (20) gemäß einer Mittelebene den gleichen gegenläufig rotierenden Kupplungsrädern (71) zugeführt wird,
**dadurch gekennzeichnet, dass** jedes Rad des Paares von Kupplungsrädern (71) Haltemittel (76) umfasst, die dazu konfiguriert sind, die Anoden- und Kathodenelemente (21, 22) jeweils zu halten und anschließend die Anoden- und Kathodenelemente (21, 22) abwechselnd auf den Separator (20) zu übertragen.

2. Vorrichtung nach Anspruch 1, wobei die Haltemittel (76) dazu konfiguriert sind, durch Saugen zu wirken.

3. Vorrichtung nach Anspruch 1 oder 2, wobei die Kupplungsmittel (70) ein Paar von gegenläufig rotierenden Walzen (73) umfassen, die stromabwärts von den Kupplungsrädern (71) angeordnet sind, wodurch ein mechanischer Prozess des Walzens des Trennstreifens (20), der die aufgetragenen Anoden- und Kathodenelemente (21, 22) trägt, durchgeführt wird, um den flexiblen Streifen (2) zu erhalten.

4. Vorrichtung nach einem der vorstehenden Ansprüche, wobei jedes Rad des Paares von Kupplungsrädern (71) dazu konfiguriert ist, die Anoden- und Kathodenelemente (21, 22) jeweils in einer jeweiligen Aufnahmeposition aufzunehmen und die Anoden- und Kathodenelemente (21, 22) alternativ zu dem Separator (20) in einer gekoppelten Position zu übertragen, die nach einer Rotation des Paares von Kupplungsrädern (71) erreicht wird.

5. Vorrichtung nach einem der vorstehenden Ansprüche, wobei sie Heizmittel umfasst, die dazu konfiguriert sind, den Separator (20) und die Anoden- und Kathodenelemente (21, 22) vor ihrer gegenseitigen Kopplung vorzuheizen.

6. Vorrichtung nach einem der vorstehenden Ansprüche, wobei die zweiten und dritten Zuführmittel (30, 40) jeweilige Übertragungsmittel (66) umfassen, die dazu konfiguriert sind, die Anoden- und Kathodenelemente (21, 22) zu den Kupplungsmitteln (70) zu übertragen, und jeweils ein Übertragungsrad (67) umfassen, das peripher eine Vielzahl von in Winkelabständen voneinander angeordneten Greifmitteln (68) trägt, die jeweils zum Aufnehmen der Anoden- und Kathodenelemente (21, 22) geeignet sind.

7. Vorrichtung nach Anspruch 6, wobei die Greifmittel (68) durch relative Hebel (69) auf dem Übertragungsrad (67) kippend getragen werden, die angepasst sind, um die Anoden- und Kathodenelemente (21, 22) zwischen einer ersten Sammelposition und einer zweiten Position zum Übertragen der Elemente zu den Kupplungsmitteln (70) auszurichten.

8. Vorrichtung nach einem der vorstehenden Ansprüche, wobei der Separator (20) entlang einer im Wesentlichen vertikalen Ebene zu dem Paar von Kupplungsrädern (71) geführt wird.

9. Vorrichtung nach einem der vorstehenden Ansprüche, wobei die Anodenelemente (21) und die Kathodenelemente (22) durch jeweiliges Schneiden einzelner Abschnitte aus einem Streifen Anodenmaterial (27) und Kathodenmaterial (28) durch jeweilige Schneidmittel (65) gebildet sind.

10. Vorrichtung nach Anspruch 9, wobei sie stromaufwärts der jeweiligen Schneidmittel (65) auch jeweilige Schermittel (56) umfasst, die geeignet sind, entlang gegenüberliegender Seiten der Streifen von Anoden- und Kathodenmaterial (27, 28) in longitudinal versetzten Positionen eine Reihe von Laschen (23) zu erzeugen, die von den Streifen vorstehen.

11. Vorrichtung nach Anspruch 9 oder 10, wobei sie stromaufwärts der Schneidmittel (65) jeweilige Zugmittel (60) der Streifen aus Anoden- und Kathodenmaterial (27, 28) umfasst, wobei die Zugmittel (60) erste und zweite Zugelemente (61, 62) umfassen, die in Reihe angeordnet und dazu konfiguriert sind, betätigt zu werden, um eine Schleife (29) des vorrückenden Streifens aus jeweils Anoden- und Kathodenmaterial (27, 28) zu bilden, um das erste Zugelement (61) funktional von dem zweiten Zugelement (62) zu entkoppeln.

12. Maschine für die Herstellung von elektrischen Energiespeichergeräten von dem Typ, der einen Stapel von Elektroden umfasst, die durch Falten eines flexiblen Streifens (2) gebildet sind, wobei die Maschine eine Vorrichtung nach einem der vorstehenden Ansprüche umfasst, wobei sie auch Faltmittel (41, 42) umfasst, die in einer geeigneten Phasenbeziehung betreibbar sind, um eine Reihe orthogonaler Faltungen (P) an dem flexiblen Streifen (2) durchzuführen und den so gefalteten flexiblen Streifen (2) auf einer Stapelebene (9) abzulegen, wobei die Faltmittel (41, 42) eine Vielzahl von Faltanordnungen (41, 42) umfassen, die peripher auf rotierbaren Mitteln (31, 32) verteilt sind, die angepasst sind, um mit kontinuierlicher Bewegung gemäß einer jeweiligen Rotationsachse (33, 34) und Kippen jeweils um eine Achse (43, 44) parallel zu der Rotationsachse (33, 34) der Rotationsmittel (31, 32) zu den Faltanordnungen (41, 42) rotiert zu werden, die Greifmitteln (49) zugeordnet sind, die geeignet sind, den flexiblen Streifen (2) nacheinander an einem zwischen den Anodenelementen (21) und den Kathodenelementen (22) angeordneten Abschnitt zu greifen.

13. Verfahren zum Bilden eines Elektrodenstreifens zur Herstellung elektrischer Energiespeichergeräte von dem Typ, der einen Stapel von Elektroden umfasst, der durch Falten eines flexiblen Streifens (2) gebildet sind, der einen Separator (20) aus dielektrischem Material umfasst, auf dem in geordneter Reihenfolge eine Reihe von Anodenelementen (21) und eine Reihe von Kathodenelementen (22) aufgetragen sind, wobei das Verfahren die folgenden Schritte umfasst:
a. Vorschieben eines Trennstreifens (20);
b. Vorschieben der Anodenelemente (21) und der Kathodenelemente (22) in einer geeigneten Phasenbeziehung;
c. Rotieren eines Paares von gegenläufig rotierenden Kupplungsrädern (71), zwischen denen der Separator (20) entlang einer Mittelebene zu denselben Kupplungsrädern (71) zugeführt wird;
d. Zuführen der Anodenelemente (21) und der Kathodenelemente (22) jeweils zu einem entsprechenden Rad des Paares von Kupplungsrädern (71), das mittels Haltemitteln (76) die Anodenelemente (21) und die Kathodenelemente (22) hält; und anschließend
e. Übertragen der Anoden- und Kathodenelemente (21, 22) von dem jeweiligen Kupplungsrad (71) abwechselnd auf den Separator (20).

14. Verfahren nach Anspruch 13, wobei jedes Rad des Paares von Kupplungsrädern (71) jeweils die Anoden- und Kathodenelemente (21, 22) in einer jeweiligen Aufnahmeposition aufnimmt und abwechselnd die Anoden- und Kathodenelemente (21, 22) an den Separator (20) in einer Kupplungsposition überträgt, die nach einer Rotation des Paares von Kupplungsrädern (71) erreicht wird.

15. Verfahren nach Anspruch 13 oder 14, wobei es den ferner den folgenden Schritt umfasst
f. Zuführen des die Anoden- und Kathodenelemente (21, 22) tragenden Separators (20), der aus den gegenläufig rotierenden Kupplungsrädern (71) austritt, zu einem Paar von gegenläufig rotierenden Walzen (73), wodurch ein mechanischer Walzvorgang des die Anoden- und Kathodenelemente tragenden Separators (20) durchgeführt wird (21, 22).

## Revendications

1. Appareil pour former une bande d'électrodes pour fabriquer des dispositifs de stockage d'énergie électrique, du type comprenant un empilement d'électrodes formé en pliant une bande flexible (2), ledit appareil comprenant
un premier moyen d'alimentation (10) adapté pour faire avancer une bande de séparation (20) ;
des deuxième et troisième moyens d'alimentation (30, 40) adaptés pour faire avancer respectivement des éléments d'anode (21) et des éléments de cathode (22) ;
un moyen (70) pour coupler lesdits éléments d'anode et de cathode (21, 22) audit séparateur (20) comprenant une paire de roues de couplage contrarotatives (71) entre lesquelles ledit séparateur (20) est alimenté, selon un plan médian aux mêmes roues de couplage contrarotatives (71),
**caractérisé en ce que** chaque roue de ladite paire de roues de couplage (71) comprend un moyen de retenue (76) configuré pour retenir lesdits éléments d'anode et de cathode (21, 22) respectivement, et ensuite pour transférer les éléments d'anode et de cathode (21, 22) alternativement sur ledit séparateur (20).

2. Appareil selon la revendication 1, dans lequel ledit moyen de retenue (76) est configuré pour agir par aspiration.

3. Appareil selon la revendication 1 ou 2, dans lequel ledit moyen de couplage (70) comprend une paire de cylindres de laminage contrarotatifs (73), disposés en aval desdites roues de couplage (71), moyennant quoi un processus mécanique de laminage de ladite bande de séparation (20) portant lesdits éléments d'anode et de cathode (21, 22) appliqués, est effectué pour obtenir ladite bande flexible (2).

4. Appareil selon l'une quelconque des revendications précédentes, dans lequel chaque roue de ladite paire de roues de couplage (71) est configurée pour recevoir respectivement lesdits éléments d'anode et de cathode (21, 22) dans une position de réception respective et pour transférer alternativement les éléments d'anode et de cathode (21, 22) au séparateur (20) dans une position couplée, atteinte après une rotation de la paire de roues de couplage (71).

5. Appareil selon l'une quelconque des revendications précédentes, dans lequel il comprend des moyens de chauffage configurés pour préchauffer ledit séparateur (20) et lesdits éléments d'anode et de cathode (21, 22) avant leur couplage mutuel.

6. Appareil selon l'une quelconque des revendications précédentes, dans lequel lesdits deuxième et troisième moyens d'alimentation (30, 40) comprennent des moyens de transfert (66) respectifs configurés pour transférer lesdits éléments d'anode et de cathode (21, 22) audit moyen de couplage (70) et comprenant une roue de transfert (67) respective portant périphériquement une pluralité de moyens de préhension (68), espacés angulairement, appropriés pour collecter lesdits éléments d'anode et de cathode (21, 22) respectivement.

7. Appareil selon la revendication 6, dans lequel ledit moyen de préhension (68) est porté en inclinaison sur ladite roue de transfert (67) par des leviers relatifs (69) adaptés pour orienter lesdits éléments d'anode et de cathode (21, 22) entre une première position de collecte et une seconde position de transfert desdits éléments vers ledit moyen de couplage (70).

8. Appareil selon l'une quelconque des revendications précédentes, dans lequel ledit séparateur (20) est alimenté vers ladite paire de roues de couplage (71) le long d'un plan sensiblement vertical.

9. Appareil selon l'une quelconque des revendications précédentes, dans lequel lesdits éléments d'anode (21) et lesdits éléments de cathode (22) sont formés en coupant respectivement des parties individuelles à partir d'une bande de matériau d'anode (27) et de matériau de cathode (28) par un moyen de coupe (65) respectif.

10. Appareil selon la revendication 9, dans lequel il comprend également en amont ledit moyen de coupe (65) respectif, un moyen de cisaillement (56) respectif appropriés pour réaliser le long des côtés opposés desdites bandes de matériau d'anode et de cathode (27, 28), dans des positions longitudinalement décalées, une série de languettes (23) faisant saillie des bandes.

11. Appareil selon la revendication 9 ou 10, dans lequel il comprend, en amont dudit moyen de coupe (65), un moyen d'étirage (60) respectif des bandes de matériau d'anode et de cathode (27, 28), ledit moyen d'étirage (60) comprenant des premier et second éléments d'étirage (61, 62) disposés en série et configurés pour être actionnés de manière à former une boucle (29) de la bande en avance de matériau d'anode et de cathode (27, 28) respectivement de manière à découpler fonctionnellement ledit premier élément d'étirage (61) dudit second élément d'étirage (62).

12. Machine pour la fabrication de dispositifs de stockage d'énergie électrique, du type comprenant un empilement d'électrodes formé par pliage d'une bande flexible (2), ladite machine comprenant un appareil selon l'une quelconque des revendications précédentes, dans laquelle elle comprend également des moyens de pliage (41, 42) pouvant fonctionner dans une relation de phase appropriée pour effectuer une série de plis orthogonaux (P) sur ladite bande flexible (2) et pour déposer la bande flexible (2) ainsi pliée sur un plan d'empilement (9), dans laquelle lesdits moyens de pliage (41, 42) comprennent une pluralité d'ensembles de pliage (41, 42) répartis périphériquement sur des moyens rotatifs (31, 32) adaptés pour être tournés avec un mouvement continu selon un axe de rotation (33, 34) respectif et basculant respectivement autour d'un axe (43, 44) parallèle audit axe de rotation (33, 34) des moyens rotatifs (31, 32), lesdits ensembles de pliage (41, 42) étant associés à des moyens de préhension (49) adaptés pour saisir ladite bande flexible (2) successivement au niveau d'une section interposée entre lesdits éléments d'anode (21) et lesdits éléments de cathode (22).

13. Procédé de formation d'une bande d'électrodes pour la fabrication de dispositifs de stockage d'énergie électrique, du type comprenant un empilement d'électrodes formé par pliage d'une bande flexible (2) comprenant un séparateur (20) de matériau diélectrique sur lequel sont appliquées, en séquence ordonnée, une série d'éléments d'anode (21) et une série d'éléments de cathode (22), ledit procédé comprend les étapes consistant à a. faire avancer une bande de séparation (20) ;
b. faire avancer lesdits éléments d'anode (21) et lesdits éléments de cathode (22) dans une relation de phase appropriée ;
c. faire tourner une paire de roues de couplage contrarotatives (71) entre lesquelles ledit séparateur (20) est alimenté le long d'un plan médian vers les mêmes roues de couplage (71) ;
d. alimenter lesdits éléments d'anode (21) et lesdits éléments de cathode (22) respectivement à une roue respective de ladite paire de roues de couplage (71) qui retient, au moyen de moyen de retenue (76), lesdits éléments d'anode (21) et lesdits éléments de cathode (22) ; et ensuite
e. transférer lesdits éléments d'anode et de cathode (21, 22) de la roue de couplage (71) respective alternativement sur ledit séparateur (20).

14. Procédé selon la revendication 13, dans lequel chaque roue de ladite paire de roues de couplage (71) reçoit respectivement lesdits éléments d'anode et de cathode (21, 22) dans une position de réception respective et transfère alternativement les éléments d'anode et de cathode (21, 22) au séparateur (20) dans une position de couplage, atteinte après une rotation de la paire de roues de couplage (71).

15. Procédé selon la revendication 13 ou 14, dans lequel il comprend l'étape supplémentaire consistant à
f. alimenter ledit séparateur (20) portant lesdits éléments d'anode et de cathode (21, 22) appliqués, sortant desdites roues de couplage contrarotatives (71), à une paire de cylindres de laminage contrarotatifs (73), moyennant quoi un processus de laminage mécanique dudit séparateur (20) portant lesdits éléments d'anode et de cathode est effectué (21, 22).
